# EUROPÄISCHE PATENTSCHRIFT

(11) **EP 1 224 087 B1**
(45) Veröffentlichungstag und Bekanntmachung des Hinweises auf die Patenterteilung: **02.01.2004**
(21) Anmeldenummer: 00971388.4
(22) Anmeldetag: 16.10.2000
(51) Int. Cl.: B60C 23/06, B60C 23/04, B60T 8/00

(54) **VERFAHREN UND SYSTEM ZUR ERKENNUNG FAHRDYNAMISCHER ZUSTÄNDE EINES FAHRZEUGS**
METHOD AND SYSTEM FOR RECOGNIZING DYNAMIC DRIVING STATES IN A VEHICLE
PROCEDE ET SYSTEME POUR RECONNAITRE DES ETATS DYNAMIQUES DE TRANSLATION D'UN VEHICULE

(30) Priorität: 25.10.1999 DE 19951274
(43) Veröffentlichungstag der Anmeldung: 24.07.2002
(73) Patentinhaber: Lucas Varity GmbH, 56070 Koblenz (DE)
(72) Erfinder: SCHMITT, Hubert, 56299 Ochtendung (DE)
(74) Vertreter: Schmidt, Steffen J., Dipl.-Ing.
(86) Internationale Anmeldenummer: PCT/EP2000/010179
(87) Internationale Veröffentlichungsnummer: WO 2001/030595

(56) Entgegenhaltungen:
- EP-A- 0 712 740
- DE-A- 4 014 561

## Beschreibung

### Hintergrund der Erfindung

Die vorliegende Erfindung betrifft ein Verfahren und ein System zur Erkennung fahrdynamischer Zustände eines Fahrzeugs, wobei zur Erkennung kritischer fahrdynamischer Zustände insbesondere Signale verwendet werden, die Änderungen der Reifendrücke von Reifen eines Fahrzeugs angeben.

### Stand der Technik

Sogenannte Fahrzeugstabilitätsregler werden bei Fahrzeugen und insbesondere bei Personenkraftwagen verwendet, um fahrdynamische Zustände des Fahrzeugs, die zu kritischen Situationen (Schleudern, Über- und Untersteuern, Blockieren der Räder, ...) beim Fahrbetrieb des Fahrzeugs führen können, zu erkennen und einzelne Komponenten des Fahrzeugs, die den fahrdynamischen Zustand des Fahrzeugs beeinflussen können, so anzusteuern, daß ein kritischer fahrdynamischer Zustand in einen unkritischen fahrdynamischen Zustand geändert, d.h. das Fahrzeug stabilisiert wird. Beispiele für derartige Fahrzeugstabilitätsregler sind Antiblockiersysteme, elektronische Stabilitätsprogramme (ESP), Anti-Schlupfregelungen, Einrichtungen zur Begrenzung des Motordrehmoments und der Motordrehzahl sowie Einrichtungen zur Dämpfung des Fahrwerks. Um einen fahrdynamischen Zustand des Fahrzeugs zu erkennen, erfassen Fahrzeugstabilitätsregler mit Hilfe verschiedener Sensoren Parameter des Fahrzeugs, die unmittelbar oder nach einer Auswertung Aussagen über den fahrdynamischen Zustand des Fahrzeugs ermöglichen. Es werden beispielsweise die auf die einzelnen Räder wirkende Bremskraft, die Gaspedalstellung bzw. die Kraftstoffzufuhr zu dem Motor, die Motordrehzahl, das Motordrehmoment, die Drehzahl der einzelnen Räder, die Beschleunigung bzw. Verzögerung des Fahrzeugs in Fahrtrichtung und in Richtungen quer zu derselben, die Beladung des Fahrzeugs usw. erfaßt. Ergänzend können auch externe Parameter, die beispielsweise Aussagen über die Wetterverhältnisse (Temperatur, Regen, Schnee, ...) oder den Abstand zu anderen Fahrzeugen ermöglichen, erfaßt werden, um zusammen mit den Fahrzeugparametern kritische fahrdynamische Zustände des Fahrzeugs besser zu erkennen und besser zu korrigieren. Ist ein kritischer fahrdynamischer Zustand erkannt worden, werden in Abhängigkeit der erfaßten Parameter einzelne oder mehrere Einrichtungen des Fahrzeugs, die den Fahrzustand des Fahrzeugs beeinflussen können, so angesteuert, daß der kritische fahrdynamische Zustand korrigiert bzw. das Fahrzeug stabilisiert wird, d.h., daß das Fahrzeug aus dem kritischen fahrdynamischen Zustand in einen unkritischen, stabilisierten fahrdynamischen Zustand gebracht wird. Zu den den Fahrzustand des Fahrzeugs beeinflussenden Einrichtungen zählen unter anderem Einrichtungen zum Steuern der Bremskraft der einzelnen Räder, der Motordrehzahl, des Motordrehmoments und der Kraftstoffzufuhr.

Da Fahrzeugstabilitätsregler automatisch, d.h. ohne Mitwirken des Fahrzeuglenkers, in kritischen fahrdynamischen Zuständen die Fahrzeugsteuerung in erheblichem Maße beeinflussen, muß die Beurteilung des aktuell vorliegenden fahrdynamischen Zustands äußerst sorgfältig vorgenommen werden. Hierfür ist es erforderlich, eine große Anzahl von Parametern oder besonders aussagekräftige Parameter, die eine Beschreibung des fahrdynamischen Zustands ermöglichen, zu erfassen und auszuwerten. Normalerweise werden hierfür viele unterschiedliche, zum Teil komplex aufgebaute Sensoren verwendet, die an unterschiedlichen Stellen in dem Fahrzeug angebracht sind. Des weiteren werden zusätzliche Sensoren oder Einrichtungen verwendet, um den Betrieb der Sensoren für die Fahrzeugstabilitätsregler bzw. deren Betrieb zu überwachen.

Demzufolge weisen herkömmliche Fahrzeugstabilitätsregler sowie dieselben umfassende Fahrzeugstabilitätssysteme einen sehr komplexen Aufbau auf und erfordern eine aufwendige Steuerung, um einen fehlerfreien Betrieb zu gewährleisten. Außerdem wird der Einbau, die Wartung und Reparatur solcher Fahrzeugstabilitätsregler/systeme aufgrund der hohen Anzahl verschiedener, an unterschiedlichen Stellen im Fahrzeug angebrachten Komponenten erschwert.

DE 40 14 561 A1 (nächstkommender Stand der Technik) offenbart ein Regelsystem für Kraftfahrzeuge, bei dem laterale Bewegungen des Kraftfahrzeugs von einer Reifendrucküberwachung kontrolliert bzw. beeinflusst werden können.

EP 0 712 740 A2 offenbart ein Verfahren und eine Vorrichtung, bei denen eine Reifendrucküberwachung eines Fahrzeugs bei Kurvenfahrt ausgesetzt wird.

### Aufgabe der Erfindung

Um diese Probleme zu bewältigen, ist es eine Aufgabe der vorliegenden Erfindung, ein Verfahren sowie ein System zur Verfügung zu stellen, das fahrdynamische, insbesondere kritische fahrdynamische Zustände eines Fahrzeugs erkennt, wobei die Anzahl der erforderlichen Sensoren sowie die Komplexität der Anordnung/Steuerung derselben reduziert wird. Außerdem soll die Anzahl der für die Erkennung eines fahrdynamischen Zustands erforderlichen, zu erfassenden Fahrzeugparameter verringert werden.

### Kurzbeschreibung der Erfindung

Diese Aufgabe der Erfindung wird durch das Verfahren nach Anspruch 1 und das System nach Anspruch 15 gelöst.

Die Erfindung basiert auf dem Phänomen, daß sich in Abhängigkeit von fahrdynamischen Zuständen die Radlasten der einzelnen Räder ändern, wodurch eine dynamische Änderung der Radumfänge, genauer der Umfänge der Reifen der einzelnen Räder, bewirkt wird. Diese Reifenumfangsänderungen führen zu einer Änderung des inneren Volumens der Reifen und somit zu einer Änderung des Drucks in den einzelnen Reifen. Diese Druckänderungen der einzelnen Reifen werden erfaßt und erfindungsgemäß verglichen und ausgewertet, um Aussagen über einen fahrdynamischen Zustand des Fahrzeugs machen zu können und insbesondere einen kritischen fahrdynamischen Zustand des Fahrzeugs zu erkennen.

Hierfür wird bei dem erfindungsgemäßen Verfahren zur Erkennung fahrdynamischer Zustände eines Fahrzeugs für wenigstens zwei Reifen des Fahrzeugs jeweils ein Referenzdruck zeitgleich erfaßt. Nachfolgend werden für die wenigstens zwei Reifen jeweils ein aktueller Druck zeitgleich erfaßt und jeweils mit dem entsprechenden Referenzdruck verglichen, um für die wenigstens zwei Reifen jeweils eine Änderung des Drucks zu ermitteln. Danach werden die Druckänderungen der wenigstens zwei Reifen miteinander verglichen. Um eine Fahrzeugzustandsinformation zu erzeugen, die den fahrdynamischen Zustand des Fahrzeugs angibt, und die insbesondere Aussagen darüber ermöglicht, ob der erkannte fahrdynamische Zustand ein kritischer fahrdynamischer Zustand ist, werden die ermittelten Druckänderungen der wenigstens zwei Reifen und das Ergebnis des Vergleichs der Druckänderungen der einzelnen Reifen miteinander ausgewertet.

Die Referenzdrücke der wenigstens zwei Reifen können für einen vorgegebenen fahrdynamischen Zustand und/oder auf einer Fahrbahn mit einer vorgegebenen Oberflächenbeschaffenheit erfaßt werden.

Eine verbesserte Erkennung fahrdynamischer Zustände des Fahrzeugs kann erreicht werden, wenn das zeitgleiche Erfassen der aktuellen Drücke für die wenigstens zwei Reifen kontinuierlich, d.h. während des gesamten Fahrbetriebs des Fahrzeugs, oder wiederholend zu vorbestimmten Zeitpunkten, deren zeitlicher Abstand vorzugsweise in Abhängigkeit anderer Fahrzeugparameter variiert wird, oder kontinuierlich während eines vorbestimmten Zeitintervalls, dessen Länge vorzugsweise durch andere Fahrzeugparameter bestimmt wird, oder wiederholend zu vorbestimmten Zeitpunkten für ein vorbestimmtes Zeitintervall durchgeführt wird, wobei auch hier vorzugsweise andere Fahrzeugparameter berücksichtigt werden.

Um einen zeitlichen Verlauf der Druckänderungen eines einzelnen Reifens zu ermitteln, werden wenigstens zwei zeitlich nacheinander aufgetretene Druckänderungen eines Reifens verglichen.

In ähnlicher Weise kann ein zeitlicher Verlauf der Druckänderungen der wenigstens zwei Reifen ermittelt werden, indem die Druckänderungen der wenigstens zwei Reifen für wenigstens zwei zeitlich nacheinander aufgetretene Druckänderungen miteinander verglichen werden.

Ferner kann der zeitliche Verlauf der Druckänderungen eines Reifens für wenigstens einen Reifen ausgewertet werden.

Ebenso ist eine Auswertung von wenigstens zwei Vergleichen der zeitgleich aufgetretenen Druckänderungen der wenigstens zwei Reifen für zeitlich nacheinander liegende Zeitpunkte möglich, zu denen zeitgleich aufgetretene Druckänderungen erfaßt wurden.

Ferner ist es zu bevorzugen, daß der zeitliche Verlauf der Druckänderungen der wenigstens zwei Reifen für wenigstens zwei zeitlich nacheinander aufgetretene Druckänderungen ausgewertet wird.

Unter Verwendung einer oder mehrerer dieser Auswertungen der Druckänderungen ist es möglich, eine Fahrzustandsinformation zu erzeugen, die den fahrdynamischen Zustand des Fahrzeugs besser wiedergibt.

Des weiteren ist die Erzeugung einer Fahrbahninformation vorgesehen, die die Oberflächenbeschaffenheit der Fahrbahn angibt, auf der sich das Fahrzeug bewegt. Erfindungsgemäß wird die Fahrbahninformation erzeugt, indem der Vergleich des zeitlichen Verlaufs der Druckänderungen wenigstens eines der wenigstens zwei Reifen ausgewertet wird.

Ergänzend ist es möglich, die Fahrbahninformation zu erzeugen, indem zusätzlich der Vergleich des zeitlichen Verlaufs der Druckänderungen der wenigstens zwei Reifen miteinander ausgewertet wird.

Um in Abhängigkeit des erkannten fahrdynamischen Zustands des Fahrzeugs dasselbe zu stabilisieren, werden die Fahrzustandsinformation und/oder die Fahrbahninformation verwendet, um Einrichtungen des Fahrzeugs zu steuern, die den fahrdynamischen Zustand des Fahrzeugs stabilisieren, wenn ein kritischer fahrdynamischer Zustand erkannt worden ist.

Außerdem können die Fahrzustandsinformation und/oder die Fahrbahninformation verwendet werden, um weitere Sensoren, die in dem Fahrzeug zum Erkennen von fahrdynamischen Parametern angebracht sind, zu steuern (kalibrieren, überwachen, aktivieren, deaktivieren, ...).

Die Aufgabe der Erfindung wird auch durch ein System zur Erkennung fahrdynamischer Zustände eines Fahrzeugs gemäß Anspruch 15 gelöst, wobei das erfindungsgemäße System unter Verwendung des oben genannten erfindungsgemäßen Verfahrens gemäß Anspruch 1 betrieben wird.

Die Erfindung stellt ein System bereit, das Drucksensoren, die zum Erfassen des Drucks von wenigstens zwei Reifen des Fahrzeugs angeordnet sind, und eine Prozessoreinheit, die mit den Drucksensoren verbunden ist und Signale von den Drucksensoren erhält und auswertet, die jeweils die von dem entsprechenden Sensor erfaßten Drücke angeben, umfaßt, wobei von der Prozessoreinheit erzeugte Fahrzustandssignale bereitgestellt werden, die basierend auf den Signalen der Drucksensoren einen fahrdynamischen Zustand des Fahrzeugs angeben.

Ferner kann das System wenigstens einen mit der Prozessoreinheit verbundenen Fahrstabilitätsregler aufweisen, der zum Stabilisieren des fahrdynamischen Zustands des Fahrzeugs dient und hierfür die Fahrzustandssignale empfängt.

Des weiteren kann eine Steuereinheit, die zwischen der Prozessoreinheit und dem wenigstens einen Fahrstabilitätsregler verbunden ist, und wenigstens ein Fahrzustandssensor, der mit der Steuereinheit verbunden ist, verwendet werden.

Vorzugsweise werden von der Steuereinheit Steuersignale für den wenigstens einen Fahrstabilitätsregler erzeugt, die auf den Fahrzustandssignalen und/oder Signalen von dem wenigstens einen Fahrzustandssensor basieren.

Um Fahrzustandssignale zu erzeugen, die den fahrdynamischen Zustand des Fahrzeugs besser wiedergeben, ist die Prozessoreinheit mit dem wenigstens einen Fahrzustandssensor verbunden, um Signale von dem wenigstens einen Fahrzustandssensor zur Erzeugung der Fahrzustandssignale zu erhalten.

Anhand der beigefügten Figuren werden im folgenden bevorzugte Ausführungsformen der Erfindung beschrieben.

### Kurzbeschreibung der Zeichnungen

- Figur 1: zeigt eine Ausführungsform des erfindungsgemäßen Systems.
- Figur 2: zeigt eine Ausführungsform des erfindungsgemäßen Systems in Verbindung mit bekannten Einrichtungen zum Erkennen und Stabilisieren von fahrdynamischen Zuständen.

### Beschreibung bevorzugter Ausführungsformen der Erfindung

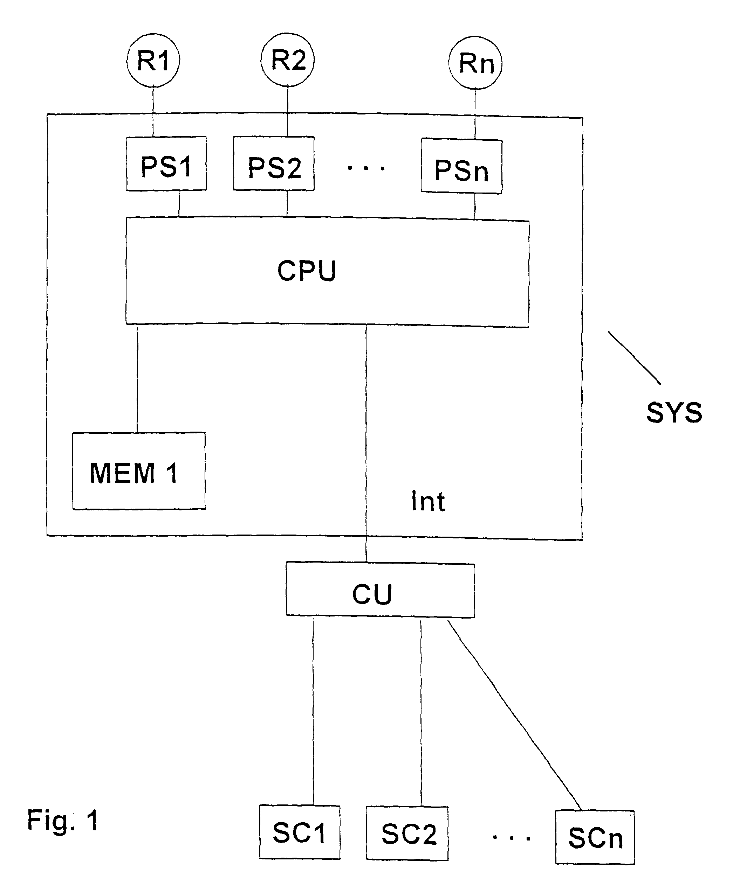

Wie in Figur 1 gezeigt, umfaßt das Systems SYS zur Erkennung fahrdynamischer Zustände eines Fahrzeugs Drucksensoren PS1, ..., PSn, die jeweils mit einem Reifen R1, ..., Rn des Fahrzeugs (nicht gezeigt) verbunden sind. Hierbei kann es sinnvoll sein, für jeden Reifen mehr als einen Drucksensor zu verwenden, um für jeden Reifen eine redundante Drucksensorenanordnung bereitzustellen. Dies ist besonders dann zu bevorzugen, wenn Drucksensoren verwendet werden, die an den Felgen der Reifen angebracht sind und von den entsprechenden Reifen umschlossen werden, die an Innenseiten der Reifen angebracht sind, oder in die Reifen oder Ventile integriert sind. In diesen Fällen kann bei einem Defekt eines ersten Drucksensors der redundanten Drucksensorenanordnung ein Austausch bzw. eine Demontage eines Reifens vermieden werden.

Die Drucksensoren PS1, ..., PSn sind zum bidirektionalen Datenaustausch mit einer Prozessoreinheit CPU verbunden. Die Verbindungen zwischen den Drucksensoren PS1, ..., PSn mit der Prozessoreinheit CPU können in Form von Verbindungen zur Übertragung elektrischer, optischer und/oder elektromagnetischer Signale ausgeführt sein. Des weiteren können die Verbindungen Einrichtungen umfassen, die als Schnittstelle zwischen den Drucksensoren PS1, ... PSn und der Prozessoreinheit CPU verwendet werden, die eine bei der Übertragung von Daten erforderliche Datenverarbeitung (Signalverarbeitung) durchführen, und/oder selbsttätig und/oder unter Steuerung der Prozessoreinheit CPU die Datenübertragung gemäß einem Datenübertragungsprotokoll steuern.

Die Prozessoreinheit CPU steuert und kontrolliert den Betrieb des Systems SYS zur Erkennung fahrdynamischer Zustände des Fahrzeugs, wobei einzelne und/oder mehrere Steuer- und Kontrollfunktionen an einzelne Komponenten des Systems SYS zur Ausführung durch dieselben übertragen werden können.

Die Prozessoreinheit CPU ist mit einer Speichereinheit MEM1 über eine bidirektionale Verbindung zum Datenaustausch verbunden, wobei diese Verbindung vergleichbar mit der oben beschriebenen Verbindung zwischen den Drucksensoren PS1, ..., PSn und der Prozessoreinheit CPU verschiedene Ausführungen haben kann. Die Speichereinheit MEM1 dient zur Speicherung von Daten, die von der Prozessoreinheit CPU ausgegeben werden, wobei die in der Speichereinheit MEM1 gespeicherten Daten bei der hier beschriebenen Ausführungsform der Erfindung von der Prozessoreinheit CPU ausgelesen werden. Alternativ oder zusätzlich ist es möglich, die Daten der Speichereinheit MEM1 anderen datenverarbeitenden Einheiten (nicht gezeigt) zur Verfügung zu stellen.

Ferner weist die Prozessoreinheit CPU eine bidirektionale Schnittstelle INT1 auf, um mit anderen Einrichtungen des Fahrzeugs bidirektional Daten auszutauschen. Bei dem hier gezeigten Ausführungsbeispiel der Erfindung ist die Prozessoreinheit CPU über die bidirektionale Schnittstelle INT1 mit einer Steuereinheit CU verbunden, die wiederum mit Sensorsteuereinrichtungen SC1, ..., SCn verbunden ist. In diesem Fall steuert die Steuereinheit CU in Antwort auf Daten von der Prozessoreinheit CPU die Sensorsteuereinrichtungen SC1, ..., SCn so, daß mit Hilfe von mit den Sensorsteuereinrichtungen SC1, ..., SCn verbundenen Einrichtungen (nicht gezeigt) ein fahrdynamischer Zustand des Fahrzeugs gesteuert/stabilisiert werden kann, falls dies notwendig ist. Alternativ oder zusätzlich ist es aber möglich, jede Einrichtung des Fahrzeugs mit der Prozessoreinheit CPU zum Datenaustausch zu verbinden, die von der Prozessoreinheit CPU empfangene Daten benötigt und/oder deren Betrieb/Leistung mit Hilfe dieser Daten verbessert werden kann und/oder die zur Steuerung der Prozessoreinheit CPU verwendet werden.

Im folgenden wird der Betrieb des Systems SYS zur Erkennung fahrdynamischer Zustände anhand des in Figur 1 gezeigten Ausführungsbeispiels erläutert. Hierbei wird angenommen, daß das System SYS in einem Fahrzeug mit vier Rädern verwendet wird, die jeweils einen Reifen R1, ..., R4 mit jeweils einem zugeordneten Drucksensor PS1, ..., PS4 aufweisen. Bei einer Verwendung des Systems SYS in einem Fahrzeug mit mehr oder weniger als vier Rädern (z.B. Lastkraftwagen, Zweiräder) und/oder mit mehr als einem Reifen pro Rad (Zwillingsreifen) und/oder bei redundanten Drucksensorenanordnungen für einen oder mehrere Reifen (siehe oben) sind entsprechend mehr Drucksensoren zu verwenden.

Beim Start des Fahrzeugs oder in Abhängigkeit von vorbestimmten Betriebsparametern (z.B. fahrdynamischen Zuständen) des Fahrzeugs wird die Prozessoreinheit CPU mittels eines der Prozessoreinheit CPU zugeführten Signals (nicht gezeigt) aktiviert.

Die Drucksensoren PS1, ..., PS4 sind an den entsprechenden Reifen R1, ..., R4 so angeordnet, daß sie den jeweiligen aktuellen Druck des entsprechenden Reifens erfassen. Die Anordnungen der Drucksensoren an den Rädern bzw. Reifen kann auf beliebige Weise erfolgen, solange gewährleistet ist, daß die Drucksensoren PS1, ..., PS4 den entsprechenden Reifendruck erfassen.

Vorzugsweise werden die Drucksensoren PS1, ..., PS4 unter Steuerung der Prozessoreinheit CPU aktiviert. Alternativ ist es möglich, die Drucksensoren PS1, ..., PS4 unabhängig von der Prozessoreinheit CPU beispielsweise beim Start des Fahrzeugs oder in Abhängigkeit von Betriebsparametern des Fahrzeugs zu aktivieren, die sich von den Betriebsparametern unterscheiden können, die zur Aktivierung der Prozessoreinheit CPU verwendet werden können.

Nach einer eventuell erforderlichen Kalibrierung, die von den Drucksensoren PS1, ..., PS4 selbständig oder unter Steuerung der Prozessoreinheit CPU vorgenommen werden kann, übertragen die Drucksensoren PS1, ..., PS4 Daten an die Prozessoreinheit CPU, die den aktuellen Reifendruck der entsprechenden Reifen R1, ..., R4 wiedergeben. Diese Datenübertragung von den Drucksensoren PS1, ..., PS4 zu der Prozessoreinheit CPU wird vorzugsweise von der Prozessoreinheit CPU gesteuert. Es ist aber auch möglich, daß die Drucksensoren PS1, ..., PS4 nach einer Aktivierung der Prozessoreinheit CPU die Übertragung der den Reifendruck angebenden Daten selbst steuern.

Die Genauigkeit, mit der die Drucksensoren PS1, ..., PS4 die entsprechenden Reifendrücke erfassen, wird in Abhängigkeit des jeweiligen Anwendungsfalls des Systems SYS durch die Prozessoreinheit CPU, und/oder die Meßauflösung der Drucksensoren PS1, ..., PS4 bestimmt. Des weiteren ist der zeitliche Ablauf der Druckerfassung einzelner der Drucksensoren PS1, ..., PS4 sowie der zeitliche Ablauf der Druckerfassungen der einzelnen Drucksensoren PS1, ..., PS4 im Verhältnis zueinander in Abhängigkeit von der jeweiligen Anwendung des Systems SYS festzulegen. Die Steuerung dieser zeitlichen Abläufe kann von der Prozessoreinheit CPU und/oder den Drucksensoren PS1, ..., PS4 durchgeführt werden.

Vorzugsweise werden die einzelnen Druckerfassungen der Drucksensoren PS1, ..., PS4 synchronisiert, d.h. zeitgleich, durchgeführt, um jeweils für einen Meßzeitpunkt die dort vorliegenden aktuellen Reifendrücke aller Reifen R1, ..., R4 bereitzustellen. In bestimmten Fällen kann es erforderlich sein, die einzelnen Druckerfassungen der Drucksensoren PS1, ..., PS4 nicht synchronisiert, d.h. zu unterschiedlichen Zeitpunkten oder in unterschiedlichen Zeitintervallen, durchzuführen. Vorzugsweise erfaßt jeder Drucksensor PS1, ..., PS4 den Druck des entsprechenden Reifens kontinuierlich (bei analogen Drucksensoren) oder in möglichst kurzen Zeitabständen (bei digitalen Drucksensoren). Auf diese Weise kann der Reifendruck der Reifen R1, ..., R4 während des Betriebs des Fahrzeugs "lückenlos" erfaßt werden.

Falls eine derartige lückenlose Druckerfassung nicht erforderlich und/oder aufgrund der anfallenden Datenmenge nicht durchführbar ist, kann die Druckerfassung auch zu zeitlich größer beabstandeten Zeitpunkten, während vorbestimmter Zeitintervalle und/oder zu vorbestimmten Zeitpunkten während vorbestimmter Zeitintervalle durchgeführt werden.

Der zeitliche Ablauf der Druckerfassung mittels der Drucksensoren PS1, ..., PS4 kann anwendungsspezifisch beliebig gewählt werden, solange gewährleistet ist, daß die Drucksensoren PS1, ..., PS4 die Reifendrücke zu den Zeitpunkten/Zeitintervallen erfassen, zu/in denen ein fahrdynamischer Zustand des Fahrzeugs erkannt werden soll.

Die Drucksensoren PS1, ..., PS4 erzeugen Ausgangssignale, die dem jeweils erfaßten Druck entsprechen. Diese Ausgangssignale der Drucksensoren PS1, ..., PS4 werden an die Prozessoreinheit CPU übertragen. Abhängig von den verwendeten Drucksensoren, der zwischen den Drucksensoren PS1, ..., PS4 und der Prozessoreinheit CPU verwendeten Verbindung und/oder der verwendeten Prozessoreinheit CPU können diese den jeweiligen Reifendruck angebenden Signale analoge oder digitale Signale sein oder bei deren Übertragung zu der Prozessoreinheit CPU von analogen/digitalen Signalen zu digitalen/analogen Signalen umgewandelt werden.

Die Prozessoreinheit CPU empfängt diese Signale der Drucksensoren PS1, ..., PS4, um, basierend auf einer Analyse dieser Signale, einen fahrdynamischen Zustand des Fahrzeugs zu ermitteln/erkennen.

In Abhängigkeit des jeweiligen fahrdynamischen Zustands des Fahrzeugs (Beschleunigung, Verzögerung, Kurvenfahrt, Fahrt auf einer unregelmäßigen Fahrbahnoberfläche, ...) ändern sich die Reifenlasten der einzelnen Reifen R1, ..., R4. Diese Laständerungen für die einzelnen Reifen R1, ..., R4 bewirken eine Änderung der Reifenumfänge. Das heißt, daß sich bei einer Erhöhung der Reifenlast der Reifenumfang des entsprechenden Reifens reduziert, während bei einer Verringerung der Reifenlast der Reifenumfang des entsprechenden Reifens vergrößert wird. Diese Umfangsänderung bewirkt eine Änderung des Volumens des entsprechenden Reifens, wodurch sich der Druck in dem entsprechenden Reifen ändert.

Basierend auf diesen Zusammenhang zwischen fahrdynamischen Zuständen des Fahrzeugs und den Reifendrücken in den einzelnen Reifen R1, ..., R4 wird unter Verwendung der Prozessoreinheit CPU der fahrdynamische Zustand des Fahrzeugs ermittelt.

Um einen fahrdynamischen Zustand, insbesondere einen kritischen fahrdynamischen Zustand des Fahrzeugs zu erkennen, sind als Referenzwerte dienende Reifendrücke zu erfassen.

Besonders geeignet sind Referenzdücke, die bei einem stabilen Fahrzustand des Fahrzeugs erfaßt werden. Hierfür wird der Reifendruck jedes einzelnen Reifens R1, ..., R4 für einen vorbestimmten fahrdynamischen Zustand des Fahrzeugs und/oder auf einer Fahrbahn mit einer vorbestimmten Oberfläche erfaßt. Vorzugsweise entspricht der vorbestimmte fahrdynamische Zustand des Fahrzeugs einer Geradeausfahrt mit konstanter Geschwindigkeit. Ferner wird hierbei eine Fahrbahn mit einer gleichmäßigen, ebenen Fahrbahnoberfläche bevorzugt.

Es ist aber auch möglich, diese Referenzdrücke für jeden vorbestimmten fahrdynamischen Zustand des Fahrzeugs und/oder jede beliebige Fahrbahnoberfläche zu erfassen, solange gewährleistet ist, daß das Fahrzeug den vorbestimmten fahrdynamischen Zustand einnimmt und die Fahrbahn die vorbestimmte Oberflächenbeschaffenheit aufweist.

Liegen diese Referenzdrücke vor, können durch Vergleiche nachfolgend ermittelter Reifendrücke der Reifen R1, ..., R4 jeweils mit dem entsprechenden Referenzdruck Aussagen über die Änderung des Reifendrucks für jeden Reifen R1, ..., R4 gemacht werden. Um einen fahrdynamischen Zustand des Fahrzeugs umfassend zu erkennen, werden zeitgleich erfaßte Reifendruckänderungen aller Reifen R1, ..., R4 miteinander verglichen.

Sinkt beispielsweise der Reifendruck der beiden Reifen einer Fahrzeugseite ab und erhöht sich der Reifendruck der beiden Reifen auf der anderen Fahrzeugseite, wird daraus geschlossen, daß der fahrdynamische Zustand des Fahrzeugs einer Kurvenfahrt in Richtung der Fahrzeugseite mit erhöhtem Reifendruck entspricht. Des weiteren kann aus diesen Reifendruckänderungen auf die Größe der Querbeschleunigung des Fahrzeugs geschlossen werden, da die die Reifendruckänderungen bewirkende Reifenumfangsänderung etwa 0,25 mm pro Grad entspricht.

Nimmt der Reifendruck der Reifen an der Vorderachse zu und der Reifendruck der Reifen an der Hinterachse des Fahrzeugs ab, so liegt ein fahrdynamischer Zustand des Fahrzeugs vor, der einer Verzögerung (Abbremsen) des Fahrzeugs entspricht. Umgekehrt liegt ein Beschleunigungszustand des Fahrzeugs vor, wenn der Reifendruck an den Vorderachsreifen ab- und an den Hinterachsreifen zunimmt. Die Größe der Verzögerung bzw. der Beschleunigung des Fahrzeugs kann aus diesen Druckänderungen ermittelt werden, da die die Druckänderungen verursachende Reifenumfangsänderung etwa 1,3 mm pro 0,1 g entspricht.

Um nicht nur einen fahrdynamischen Zustand des Fahrzeugs zu einem Zeitpunkt zu erkennen, sondern Aussagen über eine zeitliche Änderung des fahrdynamischen Zustands des Fahrzeugs machen zu können, wird ein Vergleich von zeitgleich aufgetretenen Druckänderungen der Reifen R1, ..., R4 mit wenigstens einem Vergleich für nachfolgende zeitgleich aufgetretene Druckänderungen der Reifen R1, ..., R4 verglichen. Auf diese Weise kann die Abfolge nacheinander aufgetretener fahrdynamischer Zustände des Fahrzeugs ermittelt werden, wodurch nicht nur Aussagen über erwünschte/unerwünschte Änderungen der fahrdynamischen Zustände des Fahrzeugs, sondern auch präzisere Aussagen über den jeweils aktuellen vorliegenden fahrdynamischen Zustand gemacht werden können.

Neben der Erkennung fahrdynamischer Zustände des Fahrzeugs ermöglicht das System SYS auch die Erkennung einer Oberflächenbeschaffenheit der Fahrbahn, auf der sich das Fahrzeug bewegt.

Hierfür werden nicht die Reifendruckänderungen der einzelnen Reifen R1, ..., R4 miteinander verglichen, sondern nacheinander erfaßte Reifendruckänderungen eines Reifens R1, ..., R4, wobei wenigstens zwei zeitlich nacheinander erfaßte Reifendruckänderungen eines Reifens verglichen werden.

Ändert sich beispielsweise der Reifendruck eines oder mehrerer Reifen sehr hochfrequent, wird auf eine wellige Fahrbahnoberfläche geschlossen. Die ermittelte Frequenz der Reifendruckänderung ist ein Maß für die Welligkeit der Oberflächenbeschaffenheit, die aus der ermittelten Frequenz berechnet werden kann. Treten derartige hochfrequente Reifendruckänderungen nur auf einer Fahrzeugseite auf, während die Reifendruckänderungen auf der anderen Fahrzeugseite keine hochfrequenten Änderungen aufweisen, wird daraus geschlossen, daß sich das Fahrzeug auf einer Seite über eine Fahrbahn mit welliger Oberflächenbeschaffenheit bewegt, während sich die andere Fahrzeugseite über eine Fahrbahn mit ebener Oberflächenbeschaffenheit bewegt.

Treten hochfrequente Reifendruckänderungen nur bei einem Reifen auf, so wird beispielsweise darauf geschlossen, daß der Stoßdämpfer für diesen Reifen defekt ist.

Sind von der Prozessoreinheit CPU die oben beschriebenen Vergleiche zur Erkennung eines fahrdynamischen Zustands des Fahrzeugs und/oder einer Fahrbahnoberflächenbeschaffenheit durchgeführt worden, werden von der Prozessoreinheit CPU Signale an die Steuereinheit CU ausgegeben. In Antwort auf diese Signale steuert die Steuereinheit CU die Sensorsteuereinrichtungen SC1, ..., SCn so an, daß diese ihnen zugeordnete Komponenten/Einrichtungen des Fahrzeugs, die zum Stabilisieren und/oder Steuern eines fahrdynamischen Zustands des Fahrzeugs verwendet werden, so an, daß der fahrdynamische Zustand des Fahrzeugs stabilisiert bzw. entsprechend gesteuert wird, falls der aktuell vorliegende fahrdynamische Zustand des Fahrzeugs ein kritischer oder unerwünschter Fahrzustand ist.

Die Komponenten/Einrichtungen des Fahrzeugs zum Stabilisieren/Steuern des Fahrzustands des Fahrzeugs umfassen Komponenten/Einrichtungen zur Steuerung der Bremsen, der Kraftstoffzufuhr, der Motordrehzahl, des Motordrehmoments usw..

Wie in Figur 1 dargestellt, ist die Prozessoreinheit CPU mit einer Speichereinheit MEM1 verbunden. Anstelle der hier gezeigten externen Speichereinheit MEM1 kann auch eine in die Prozessoreinheit CPU integrierte Speichereinheit verwendet werden. In der Speichereinheit MEM1 werden Daten gespeichert, auf die von der Prozessoreinheit CPU zugegriffen wird oder von derselben an die Speichereinheit MEM1 übertragen werden.

Vorzugsweise ist die Prozessoreinheit CPU als programmierbare Prozessoreinheit (z.B. Mikroprozessor, Rechnersystem) ausgeführt. Die Daten, die zur Programmierung der Prozessoreinheit CPU sowie zur Steuerung des gesamten Systems SYS von der Prozessoreinheit CPU verwendet werden, können beispielsweise in einem ROM-Speicher der Prozessoreinheit CPU gespeichert werden. Es ist jedoch vorteilhaft, diese Daten in der Speichereinheit MEM1 zu speichern, da auf diese Weise die Programmier- und Steuerdaten auf einfache Weise verändert werden können, beispielsweise durch einen Austausch der Speichereinheit MEM1 oder eine Veränderung der Daten in der Speichereinheit MEM1 mittels eines externen Programmiergeräts. Somit kann ein Typ der Prozessoreinheit CPU für verschiedene Anwendungen verwendet werden, wobei die Programmier- und Steuerdaten für die Prozessoreinheit CPU anwendungsspezifisch anzupassen sind.

Des weiteren werden in der Speichereinheit MEM1 Daten der Prozessoreinheit CPU gespeichert, die dieselbe in Antwort auf erhaltene Drucksignale der Drucksensoren PS1, ..., PS4 erzeugt hat. Derartige Daten umfassen Referenzreifendruck- und Reifendrucksänderungsdaten. Auf diese Daten in der Speichereinheit MEM1 kann die Prozessoreinheit CPU während des Betriebs des Systems SYS zugreifen, um fahrdynamische Zustände des Fahrzeugs erkennen zu können. Außerdem können die Daten in der Speichereinheit MEM1 von der Prozessoreinheit CPU verwendet werden, um durch einen Vergleich dieser Daten mit Daten aktuell vorliegender Reifendrücke die Erkennung fahrdynamischer Zustände des Fahrzeugs besser durchführen zu können. Hierbei ist es möglich, die von der Prozessoreinheit CPU erzeugten Daten in ihrer ursprünglichen Form in der Speichereinheit MEM1 zu speichern oder die von der Prozessoreinheit CPU erzeugte Daten zum Aufbau einer Nachschlagetabelle, eines neuronalen Netzes oder eines Parametersatzes für Fuzzy-Logic-Algorithmen zu verwenden.

Ferner kann die Speichereinheit MEM1 Daten enthalten, die von der Prozessoreinheit CPU mit erhaltenen Reifendruckwerten verglichen werden, um bestimmte fahrdynamische Zustände des Fahrzeugs schneller zu erkennen. Diese Grenzwerte können beispielsweise besonders kritische fahrdynamische Zustände des Fahrzeugs definieren, die besonders schnell korrigiert werden müssen, um das Fahrzeug in einen kontrollierbaren, gewünschten fahrdynamischen Zustand zu bringen. Die Vorgabe entsprechender Grenzwerte in Form von in der Speichereinheit MEM1 gespeicherten Daten reduziert bei derartigen fahrdynamischen Zuständen des Fahrzeugs den Rechenaufwand der Prozessoreinheit CPU.

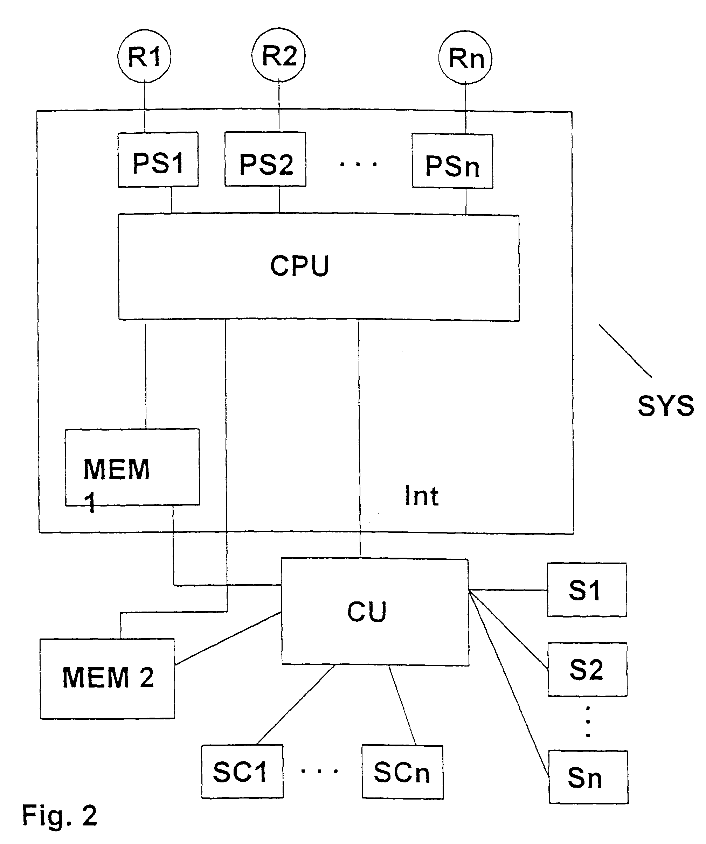

Während in Figur 1 eine Ausführungsform des Systems SYS zur Erkennung fahrdynamischer Zustände eines Fahrzeugs gezeigt ist, bei der das Systems SYS als alleiniges System zur Erkennung fahrdynamischer Zustände in dem Fahrzeug angebracht ist, zeigt Figur 2 eine Ausführungsform des Systems SYS, die mit anderen (bekannten) Fahrzeugstabilitätsreglern verwendet wird.

Bei dieser Ausführungsform ist die Steuereinheit CU mit Fahrzeugstabilitätssensoren S1, ..., Sn verbunden. Die Fahrzeugstabilitätssensoren S1, ..., Sn erfassen Betriebsparameter des Fahrzeugs, wie z.B. die Bremstätigkeit, die Gaspedalstellung, die Motordrehzahl, das Motordrehmoment, Beschleunigungen und/oder Verzögerungen des Fahrzeugs in Fahrtrichtung und in Richtungen quer zu der Fahrtrichtung, die Raddrehzahl, die Beladung des Fahrzeugs und den Betrieb zusätzlicher Einrichtungen des Fahrzeugs (z.B. Autotelefon, Autoradio). Des weiteren können Fahrzeugstabilitätssensoren verwendet werden, die Umgebungsparameter (Temperatur, Wetterverhältnisse, ...), aber auch fahrerspezifische Parameter (Atemfrequenz, Herzfrequenz, Augenbewegungen, Körpertemperatur, Hautfeuchtigkeit, ...) erfassen.

Die Fahrzeugstabilitätssensoren S1, ..., Sn sind Komponenten bekannter Fahrzeugstabilitätsregler, wie z.B. ESP, ABS, ASR, MSR und Einrichtungen zur Fahrwerksdämpfung. Derartige bekannte Fahrzeugstabilitätsregler umfassen normalerweise eine Prozessor/Steuereinheit, die Daten der entsprechenden Fahrzeugstabilitätssensoren erfassen und auswerten, um entsprechende Fahrzeugstabilitätsreglereinrichtungen zum Stabilisieren und/oder Steuern des fahrdynamischen Zustands des Fahrzeugs zu steuern. Bei dem hier gezeigten Ausführungsbeispiel sind die erforderlichen Prozessor-/Steuereinheiten derartiger bekannter Fahrzeugstabilitätsregler in die Prozessoreinheit CPU und/oder Steuereinheit CU integriert. Diese Integration reduziert die erforderliche Anzahl notwendiger Komponenten zur Erkennung fahrdynamischer Zustände des Fahrzeugs, wobei es - beispielsweise bei einem nachträglichen Einbau des Systems SYS - auch möglich ist, bekannte und/oder bereits in dem Fahrzeug vorhandene Prozessor-/Steuereinheiten gemeinsam mit dem System SYS und insbesondere gemeinsam mit der Prozessoreinheit CPU zu verwenden, wobei hier zusätzliche Verbindungen (beispielsweise CAN-Bus zur Datenübertragung) zwischen den verschiedenen Einheiten erforderlich sind. Die Fahrzeugstabilitätsreglereinrichtungen umfassen, wie bei der Ausführungsform von Figur 1 dargestellt, Einrichtungen zur Steuerung der Bremsen, der Kraftstoffzufuhr, der Motordrehzahl, des Motordrehmoments usw..

Die Steuereinheit CU ist mit einer weiteren Speichereinheit MEM2 verbunden, die vorzugsweise auch mit der Prozessoreinheit CPU verbunden ist. Ferner ist die Steuereinheit CU mit der Speichereinheit MEM1 verbunden, um auf von der Prozessoreinheit CPU zugeführte Daten zuzugreifen. Vergleichbar mit der Speichereinrichtung MEM1 enthält die Speichereinrichtung MEM2 Daten zur Steuerung der Steuereinheit CU und/oder der Prozessoreinheit CPU sowie von der Steuereinheit CU und/oder von der Prozessoreinheit CPU zugeführte Daten. Alternativ können die Speichereinheiten MEM1 und MEM2 in einer Speichereinheit integriert werden, um die Anzahl verwendeter Komponenten zu reduzieren.

Die Speichereinheit MEM2 enthält ebenfalls als Grenzwerte dienende Daten, wobei in Abhängigkeit der Anwendung auf Daten in den Speichereinheiten MEM1 und MEM2 von der Prozessoreinheit CPU und/oder der Steuereinheit CU zugegriffen werden kann.

## Patentansprüche

1. Verfahren zur Erkennung fahrdynamischer Zustände eines Fahrzeugs, mit folgenden Schritten:
- zeitgleiches Erfassen jeweils eines Referenzdrucks für wenigstens zwei Reifen (R1, ..., RN) des Fahrzeugs,
- zeitgleiches Erfassen jeweils eines aktuellen Drucks für jeden der wenigstens zwei Reifen (R1, ..., RN),
- Vergleichen des Referenzdrucks der wenigstens zwei Reifen jeweils mit dem entsprechenden aktuellen erfaßten Druck, um für jeden der wenigstens zwei Reifen (R1, ..., RN) eine Änderung des Drucks zu ermitteln,
- Vergleichen der Druckänderungen der wenigstens zwei Reifen (R1, ..., RN), und
- Auswerten der ermittelten Druckänderungen der wenigstens zwei Reifen (R1, ..., RN) und des Vergleichs derselben, um eine Fahrzustandsinformation zu erzeugen, die den fahrdynamischen Zustand des Fahrzeugs angibt.

2. Verfahren nach Anspruch 1, **dadurch gekennzeichnet, daß**
- die Referenzdrücke der wenigstens zwei Reifen (R1, ..., RN) für einen vorgegebenen fahrdynamischen Zustand des Fahrzeugs und/oder auf einer Fahrbahn mit vorgegebener Oberflächenbeschaffenheit erfaßt werden.

3. Verfahren nach Anspruch 1 oder 2, **dadurch gekennzeichnet, dass** das zeitgleiche Erfassen des aktuellen Drucks für die wenigstens zwei Reifen (R1, ..., RN)
- kontinuierlich, oder
- zu vorbestimmten Zeitpunkten wiederholend, oder
- für ein vorbestimmtes Zeitintervall kontinuierlich, oder
- wiederholend zu vorbestimmten Zeitpunkten für ein vorbestimmtes Zeitintervall durchgeführt wird.

4. Verfahren nach Anspruch 3, **dadurch gekennzeichnet, daß** die vorbestimmten Zeitpunkte und/oder Zeitintervalle in Abhängigkeit von fahrdynamischen Zuständen des Fahrzeugs variiert werden.

5. Verfahren nach Anspruch 3 oder 4, **gekennzeichnet durch**
- Vergleichen von wenigstens zwei zeitlich nacheinander aufgetretenen Druckänderungen wenigstens eines der wenigstens zwei Reifen(R1, ..., RN), um einen zeitlichen Verlauf der Druckänderungen des Reifens zu ermitteln.

6. Verfahren nach einem der Ansprüche 3 bis 5, **gekennzeichnet durch**
- Vergleichen der Druckänderungen der wenigstens zwei Reifen (R1, ..., RN) für wenigstens zwei zeitlich nacheinander aufgetretene Druckänderungen, um einen zeitlichen Verlauf der Druckänderungen der wenigstens zwei Reifen (R1, .., RN) zu ermitteln.

7. Verfahren nach Anspruch 5 oder 6, **gekennzeichnet durch**
- Auswerten des zeitlichen Verlaufs der Druckänderungen für wenigstens einen der wenigstens zwei Reifen (R1, ..., RN) .

8. Verfahren nach einem der Ansprüche 3 bis 7, **gekennzeichnet durch**
- Auswerten von wenigstens zwei Vergleichen der zeitlich aufgetretenen Druckänderungen der wenigstens zwei Reifen (R1, ..., RN) für zeitlich nacheinander liegende Zeitpunkte, zu denen zeitgleich aufgetretene Druckänderungen erfaßt wurden.

9. Verfahren nach einem der Ansprüche 6 bis 8, **gekennzeichnet durch**
- Auswerten des zeitlichen Verlaufs der Druckänderungen der wenigstens zwei Reifen (R1, ..., RN).

10. Verfahren nach einem der Ansprüche 7 bis 9, **dadurch gekennzeichnet, daß**
- die Fahrzustandsinformation basierend auf wenigstens einer der Auswertungen gemäß den Ansprüchen 7, 8 und 9 erzeugt wird.

11. Verfahren nach einem der Ansprüche 4 bis 10, **gekennzeichnet durch**
- Auswerten des Vergleichs des zeitlichen Verlaufs der Druckänderungen für wenigstens einen der wenigstens zwei Reifen (R1, ..., RN), um eine Fahrbahninformation zu erzeugen, die die Oberflächenbeschaffenheit der Fahrbahn angibt.

12. Verfahren nach Anspruch 11, **gekennzeichnet durch**
- Auswerten des Vergleichs des zeitlichen Verlaufs der Druckänderungen der wenigstens zwei Reifen (R1, ... RN), um die Fahrbahninformation zu erzeugen.

13. Verfahren nach einem der Ansprüche 1 bis 12, **dadurch gekennzeichnet, daß**
- die Fahrzustandsinformation und/oder die Fahrbahninformation zum Steuern von Einrichtungen des Fahrzeugs verwendet wird, die den Fahrzustand des Fahrzeugs stabilisieren und/oder steuern.

14. Verfahren nach einem der Ansprüche 1 bis 13, **dadurch gekennzeichnet, daß**
- weitere Sensoren zum Erkennen von fahrdynamischen Zuständen des Fahrzeugs unter Verwendung der Fahrzustandsinformation und/oder der Fahrbahninformation gesteuert werden.

15. System zur Erkennung fahrdynamischer Zustände eines Fahrzeugs unter Verwendung des Verfahrens nach Anspruch 1, umfassend:
- Drucksensoren (PS1, ..., PSn), die jeweils zum Erfassen von Reifendrücken von wenigstens zwei Reifen (R1, ..., RN) des Fahrzeugs angeordnet sind, und
- eine Prozessoreinheit (CPU), die mit den Drucksensoren (PS1, ..., PSn) verbunden ist und Signale von den Drucksensoren (PS1, ..., PSn) erhält und auswertet, die jeweils die von dem entsprechenden Drucksensor erfaßten Drücke angeben, wobei
- von der Prozessoreinheit (CPU) erzeugte Fahrzustandssignale basierend auf den Signalen der Drucksensoren (PS1, ..., PSn) einen fahrdynamischen Zustand des Fahrzeugs angeben.

16. System nach Anspruch 15, **gekennzeichnet durch**
- von der Prozessoreinheit (CPU) erzeugte Fahrbahnsignale, die basierend auf den Signalen der Drucksensoren (PS1, ..., PSn) eine Oberflächenbeschaffenheit der Fahrbahn angeben, auf der sich das Fahrzeug bewegt.

17. System nach Anspruch 15 oder 16, **gekennzeichnet durch**
- wenigstens einen mit der Prozessoreinheit (CPU) verbundenen Fahrstabilitätsregler (SC1, ..., SCn) zum Stabilisieren/Kontrollieren des fahrdynamischen Zustands des Fahrzeugs basierend auf den von der Prozessoreinheit (CPU) erzeugten Signale.

18. System nach einem der Ansprüche 15 bis 17, **dadurch gekennzeichnet, daß**
- eine Steuereinheit (CU) zwischen der Prozessoreinheit (CPU) und dem wenigstens einen Fahrstabilitätsregler (SC1, ..., SCn) verbunden ist, und
- wenigstens ein Fahrzustandssensor (S1, ..., Sn) mit der Steuereinheit (CU) verbunden ist.

19. System nach einem der Ansprüche 15 bis 18, **gekennzeichnet durch**
- von der Steuereinheit (CU) erzeugte Signale für den wenigstens einen Fahrstabilitätsregler (SC1, ..., SCn), die auf den Fahrzustandssignalen und/oder Signalen von dem wenigstens einen Fahrzustandssensor (S1, ..., Sn) basieren.

20. System nach einem der Ansprüche 15 bis 19, **dadurch gekennzeichnet, daß**
- die Prozessoreinheit (CPU) mit dem wenigstens einen Fahrzustandssensor (S1, ..., Sn) verbunden ist, um Signale von demselben zur Erzeugung der Fahrzustandssignale und/oder der Fahrbahnsignale zu erhalten.

## Claims

1. A method for recognizing driving-dynamic states of a vehicle, with the following steps:
- isochronous measurement of respectively one reference pressure for at least two tyres (R1, ..., RN) of the vehicle,
- isochronous measurement of respectively one current pressure for each of the at least two tyres (R1, ..., RN),
- comparison of the reference pressure of the at least two tyres with, respectively, the corresponding current measured pressure, for the purpose of determining a variation of the pressure for each of the at least two tyres (R1, ..., RN),
- comparison of the pressure variations of the at least two tyres (R1, ..., RN), and
- evaluation of the determined pressure variations of the at least two tyres (R1, ..., RN) and of the comparison of the same, for the purpose of generating driving state information which indicates the driving-dynamic state of the vehicle.

2. The method according to Claim 1, **characterized in that**
- the reference pressures of the at least two tyres (R1, ..., RN) are measured for a predefined driving-dynamic state of the vehicle and/or on a carriageway with a predefined surface quality.

3. The method according to Claim 1 or 2, **characterized in that** the isochronous measurement of the current pressure for the at least two tyres (R1, ..., RN) is performed
- continuously, or
- repeatedly, at predetermined instants, or
- continuously for a predetermined interval of time, or
- repeatedly, at predetermined instants, for a predetermined interval of time.

4. The method according to Claim 3, **characterized in that** the predetermined instants and/or intervals of time are varied in dependence on driving-dynamic states of the vehicle.

5. The method according to Claim 3 or 4, **characterized by**
- comparison of at least two pressure variations that occurred in temporal succession, of at least one of the at least two tyres (R1, ..., RN), for the purpose of determining a temporal course of the pressure variations of the tyre.

6. The method according to one of Claims 3 to 5, **characterized by**
- comparison of the pressure variations of the at least two tyres (R1, ..., RN) for at least two pressure variations that occurred in temporal succession, for the purpose of determining a temporal course of the pressure variations of the at least two tyres (R1, ..., RN).

7. The method according to Claim 5 or 6, **characterized by**
- evaluation of the temporal course of the pressure variations for at least one of the at least two tyres (R1, ..., RN).

8. The method according to one of Claims 3 to 7, **characterized by**
- evaluation of at least two comparisons of the isochronously occurring pressure variations of the at least two tyres (R1, ..., RN) for temporally successive instants at which pressure variations that occurred isochronously were measured.

9. The method according to one of Claims 6 to 8, **characterized by**
- evaluation of the temporal course of the pressure variations of the at least two tyres (R1, ..., RN).

10. The method according to one of Claims 7 to 9, **characterized in that**
- the driving state information is generated on the basis of at least one of the evaluations according to Claims 7, 8 and 9.

11. The method according to one of Claims 4 to 10, **characterized by**
- evaluation of the comparison of the temporal course of the pressure variations for at least one of the at least two tyres (R1, ..., RN), for the purpose of generating carriageway information which indicates the surface quality of the carriageway.

12. The method according to Claim 11, **characterized by**
- evaluation of the comparison of the temporal course of the pressure variations of the at least two tyres (R1, ..., RN), for the purpose of generating the carriageway information.

13. The method according to one of Claims 1 to 12, **characterized in that**
- the driving state information and/or the carriageway information is/are used for controlling devices of the vehicle which stabilize and/or control the driving state of the vehicle.

14. The method according to one of Claims 1 to 13, **characterized in that**
- further sensors for recognizing driving-dynamic states of the vehicle are controlled by use of the driving state information and/or the carriageway information.

15. A system for recognizing driving-dynamic states of a vehicle using the method according to Claim 1, comprising:
- pressure sensors (PS1, ..., PSn) which are respectively arranged for the purpose of measuring tyre pressures of at least two tyres (R1, ..., Rn) of the vehicle, and
- a processor unit (CPU) which is connected to the pressure sensors (PS1, ..., PSn) and receives and evaluates signals from the pressure sensors (PS1, ..., PSn) which respectively indicate the pressures measured by the corresponding pressure sensor, wherein
- driving state signals generated by the processor unit (CPU) on the basis of the signals of the pressure sensors (PS1, ..., PSn) indicate a driving-dynamic state of the vehicle.

16. The system according to Claim 15, **characterized by**
- carriageway signals generated by the processor unit (CPU) which, on the basis of the signals of the pressure sensors (PS1, ..., PSn), indicate a surface quality of the carriageway on which the vehicle is moving.

17. The system according to Claim 15 or 16, **characterized by**
- at least one driving stability controller (SC1, ... SCn), connected to the processor unit (CPU), for stabilizing/monitoring the driving-dynamic state of the vehicle on the basis of the signals generated by the processor unit (CPU).

18. The system according to one of Claims 15 to 17, **characterized in that**
- a control unit (CU) is connected between the processor unit (CPU) and the at least one driving stability controller (SC1, ..., SCn), and
- at least one driving state sensor (S1, ..., Sn) is connected to the control unit (CU).

19. The system according to one of Claims 15 to 18, **characterized by**
- signals, generated by the control unit (CU), for the at least one driving stability controller (SC1, ..., SCn) which are based on the driving state signals and/or signals from the at least one driving state sensor (S1, ..., Sn).

20. The system according to one of Claims 15 to 19, **characterized in that**
- the processor unit (CPU) is connected to the at least one driving state sensor (S1, ..., Sn) in order to obtain signals from the same for the purpose of generating the driving state signals and/or the carriageway signals.

## Revendications

1. Procédé de détection des états dynamiques de conduite d'un véhicule, comportant les étapes suivantes :
- saisie simultanée d'une pression de référence respective pour au moins deux pneus (R1, ..., RN) du véhicule,
- saisie simultanée d'une pression courante respective pour chacun desdits au moins deux pneus (R1, ..., RN),
- comparaison de la pression de référence desdits au moins deux pneus respectivement avec la pression courante correspondante saisie, pour déterminer pour chacun desdits au moins deux pneus (R1, ..., RN) une variation de la pression,
- comparaison des variations de pression desdits au moins deux pneus (R1, ..., RN) et
- analyse des variations de pression déterminées desdits au moins deux pneus (R1, ..., RN) et de la comparaison de celles-ci, pour générer une information d'état de conduite qui indique l'état dynamique de conduite du véhicule.

2. Procédé selon la revendication 1, **caractérisé en ce que**
- les pressions de référence desdits au moins deux pneus (R1, ..., RN) sont saisies pour un état dynamique de conduite prédéterminé du véhicule et/ou sur une chaussée ayant une condition de surface prédéterminée.

3. Procédé selon la revendication 1 ou 2, **caractérisé en ce que** la saisie simultanée de la pression courante desdits au moins deux pneus (R1, ..., RN) est réalisée
- en continu ou
- de manière répétitive à des instants prédéterminés ou
- en continu pour un intervalle de temps prédéterminé, ou
- de manière répétitive à des instants prédéterminés pour un intervalle de temps prédéterminé.

4. Procédé selon la revendication 3, **caractérisé en ce que** les instants et/ou les intervalles de temps prédéterminés varient en fonction des états dynamiques de conduite du véhicule.

5. Procédé selon la revendication 3 ou 4, **caractérisé par**
- une comparaison d'au moins deux variations de pression, survenant temporellement l'une après l'autre, au moins de l'un desdits au moins deux pneus (R1, ..., RN), pour établir une courbe des variations de pression du pneu en fonction du temps.

6. Procédé selon l'une des revendications 3 à 5, **caractérisé par**
- une comparaison des variations de pression desdits au moins deux pneus (R1, ..., RN) pour au moins deux variations de pression, survenant temporellement l'une après l'autre, pour établir une courbe des variations de pression desdits au moins deux pneus (R1, ..., RN) en fonction du temps.

7. Procédé selon la revendication 5 ou 6, **caractérisé par**
- une analyse de la courbe des variations de pression en fonction du temps pour au moins un desdits au moins deux pneus (R1, ..., RN).

8. Procédé selon l'une des revendications 3 à 7, **caractérisé par**
- une analyse d'au moins deux comparaisons des variations de pression, survenues dans le temps, desdits au moins deux pneus (R1, ..., RN) pour des instants situés l'un après l'autre temporellement, auxquels les variations de pression survenant simultanément ont été saisies.

9. Procédé selon l'une des revendications 6 à 8, **caractérisé par**
- une analyse de la courbe des variations de pression en fonction du temps desdits au moins deux pneus (R1, ..., RN).

10. Procédé selon l'une des revendications 7 à 9, **caractérisé en ce que**
- l'information d'état de conduite est obtenue sur la base d'au moins une des évaluations selon les revendications 7, 8 et 9.

11. Procédé selon l'une des revendications 4 à 10, **caractérisé par**
- une analyse de la comparaison de la courbe des variations de pression en fonction du temps pour au moins un desdits au moins deux pneus (R1, ..., RN), pour obtenir une information sur la chaussée qui indique la condition de surface de celle-ci.

12. Procédé selon la revendication 11, **caractérisé par**
- une analyse de la comparaison de la courbe des variations de pression en fonction du temps desdits au moins deux pneus (R1, ..., RN), pour obtenir l'information sur la chaussée.

13. Procédé selon l'une des revendications 1 à 12, **caractérisé en ce que**
- l'information d'état de conduite et/ou l'information sur la chaussée est utilisée pour la commande des dispositifs du véhicule qui stabilisent et/ou commandent l'état de conduite de celui-ci.

14. Procédé selon l'une des revendications 1 à 13, **caractérisé en ce que**
- d'autres capteurs pour la saisie des états dynamiques de conduite du véhicule sont commandés par utilisation de l'information d'état de conduite et/ou l'information sur la chaussée.

15. Système de détection des états dynamiques de conduite d'un véhicule par utilisation du procédé selon la revendication 1, comprenant :
- des capteurs de pression (PS1, ..., PSn) qui sont disposés respectivement pour la saisie des pressions de pneus d'au moins deux pneus (R1, ..., RN) du véhicule, et
- une unité de traitement (CPU) qui est reliée avec les capteurs de pression (PS1, ..., PSn) et reçoit et analyse des signaux provenant des capteurs de pression (PS1, ..., PSn), qui indiquent respectivement les pressions saisies par le capteur de pression correspondant,
- les signaux d'état de conduite produits par l'unité de traitement (CPU) indiquant, sur la base des signaux des capteurs de pression (PS1, ..., PSn), un état dynamique de conduite du véhicule.

16. Système selon la revendication 15, **caractérisé par**
- des signaux relatifs à la chaussée, produit par l'unité de traitement (CPU), qui indiquent, sur la base des signaux des capteurs de pression (PS1, ..., PSn), une condition de surface de la chaussée sur laquelle le véhicule se déplace.

17. Système selon la revendication 15 ou 16, **caractérisé par**
- au moins un régulateur de stabilité de conduite (SC1, ..., SCn), relié à l'unité de traitement (CPU), pour stabiliser/contrôler l'état dynamique de conduite du véhicule sur la base des signaux produits par l'unité de traitement (CPU).

18. Système selon l'une des revendications 15 à 17, **caractérisé en ce que**
- une unité de commande (CU) est reliée entre l'unité de traitement (CPU) et ledit au moins un régulateur de stabilité de conduite (SC1, ..., SCn) et
- au moins un capteur d'état de conduite (S1, ..., Sn) est relié avec l'unité de commande (CU).

19. Système selon l'une des revendications 15 à 18, **caractérisé par**
- les signaux produits par l'unité de commande (CU) pour ledit au moins un régulateur de stabilité de conduite (SC1, ..., SCn), qui sont basés sur les signaux d'état de conduite et/ou les signaux dudit au moins un capteur d'état de conduite (S1, ..., Sn).

20. Système selon l'une des revendications 15 à 19, **caractérisé en ce que**
- l'unité de traitement (CPU) est reliée avec ledit au moins un capteur d'état de conduite (S1, ..., Sn), pour obtenir de celui-ci des signaux pour l'émission des signaux d'état de conduite et/ou des signaux relatifs à la chaussée.
